# EUROPEAN PATENT APPLICATION

(11) **EP 4 768 225 A1**
(43) Date of publication of application: **01.07.2026**
(21) Application number: 25211984.7
(22) Date of filing: 29.10.2025
(51) Int. Cl.: B29C 49/12, B29C 49/42

(54) **BLOW MOLDING MECHANISM AND MOLD UNIT**

(30) Priority: 26.12.2024 JP 2024230635
(71) Applicant: Sumitomo Heavy Industries, Ltd., Tokyo 141-6025 (JP)
(72) Inventor: SATO, Takayuki, Chiba, 263-0001, (JP); TANI, Ryosuke, Chiba, 263-0001, (JP); TAKAHASHI, Rei, Chiba, 263-0001, (JP)
(74) Representative: Louis Pöhlau Lohrentz

(57) **Abstract**

A blow molding mechanism (1) includes an extension rod (16) that is inserted into a bottomed cylindrical intermediate molded product (200) including an opening portion (205) via the opening portion (205) and extends the intermediate molded product (200) when blow molding is performed on the intermediate molded product (200), the extension rod (16) includes a columnar main body (161) that extends inside the intermediate molded product (200) and a tip portion that is formed at a tip portion of the main body (161) and includes a contact portion (162) which is brought into contact with an inner wall (206) of the intermediate molded product (200), and a diameter (b) of the contact portion (162) is larger than a diameter (a) of the main body (161).

## Description

### BACKGROUND OF THE INVENTION

### Field of the Invention

The present invention relates to a blow molding mechanism and a mold unit.

### Description of Related Art

Injection blow molding in which injection molding and blow molding are combined is known. In the injection molding of the injection blow molding, first, a bottomed cylindrical intermediate molded product including an opening portion is molded. Next, in the blow molding, the intermediate molded product is extended by an extension rod protruding into the intermediate molded product, and high-pressure air is blown and expanded to mold a final molded product (for example, Japanese Patent No. 4425750).

### SUMMARY OF THE INVENTION

The extension rod extends itself in a state where a tip portion thereof is in contact with the intermediate molded product, thereby extending the intermediate molded product. However, as the extension rod extends the intermediate molded product, a part of the intermediate molded product comes into contact with a portion of the extension rod other than the tip portion in some cases. When the intermediate molded product includes many portions in contact with the extension rod having a lower temperature than the intermediate molded product, the temperature of the intermediate molded product is decreased by heat exchange, and a temperature required during blow molding is lowered in some cases. In this case, appearance quality of the final molded product is decreased.

An object of the present invention is to suppress contact of a portion other than a tip portion of an extension rod that extends an intermediate molded product during blow molding with the intermediate molded product.

According to an aspect of the present invention, in order to achieve such an object, there is provided a blow molding mechanism including an extension rod that is inserted into a bottomed cylindrical intermediate molded product including an opening portion via the opening portion and extends the intermediate molded product when blow molding is performed on the intermediate molded product, in which the extension rod includes a columnar main body that extends inside the intermediate molded product and a tip portion that is formed at a tip portion of the main body and includes a contact portion which is brought into contact with an inner wall of the intermediate molded product, and a diameter of the contact portion is larger than a diameter of the main body.

Herein, the contact portion may be attachable to and detachable from the main body.

In addition, the main body may not come into contact with an inner wall of the intermediate molded product after extension.

In addition, a difference between the diameter of the contact portion and the diameter of the main body may be larger than a value obtained by dividing a difference between an inner diameter of the intermediate molded product after the extension and the diameter of the main body by 2.

In addition, according to an aspect of the present invention completed in order to achieve such an object, there is provided a mold unit including a blow molding mechanism, in which the blow molding mechanism includes an extension rod that is inserted into a bottomed cylindrical intermediate molded product including an opening portion via the opening portion and extends the intermediate molded product when blow molding is performed on the intermediate molded product, the extension rod includes a columnar main body that extends inside the intermediate molded product and a tip portion that is formed at a tip portion of the main body and includes a contact portion which is brought into contact with an inner wall of the intermediate molded product, and a diameter of the contact portion is larger than a diameter of the main body.

According to the present invention, contact of a portion other than the tip portion of the extension rod that extends the intermediate molded product during blow molding with the intermediate molded product can be suppressed.

### BRIEF DESCRIPTION OF THE DRAWINGS

FIG. 1 is a sectional view showing an example of a configuration of a blow molding mechanism according to the present embodiment.
FIG. 2 is a sectional view showing an example of a configuration of the blow molding mechanism according to the present embodiment.
FIG. 3 is a sectional view showing a state where an extension rod of FIG. 1 extends an intermediate molded product.
FIG. 4 is a sectional view showing an example of a configuration of the blow molding mechanism of the related art.
FIG. 5 is a sectional view showing an example of the configuration of the blow molding mechanism of the related art.
FIG. 6 is a sectional view showing a state where an extension rod of the related art of FIG. 4 extends the intermediate molded product.

### DETAILED DESCRIPTION OF THE INVENTION

Hereinafter, an embodiment of the present invention will be described in detail with reference to the accompanying drawings.

### <Configuration of Blow Molding Mechanism 1>

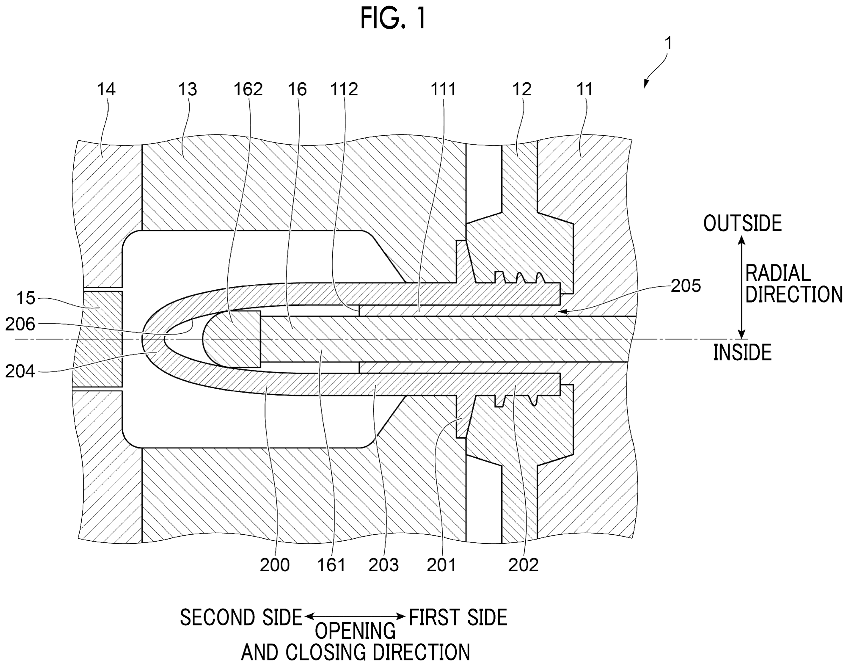

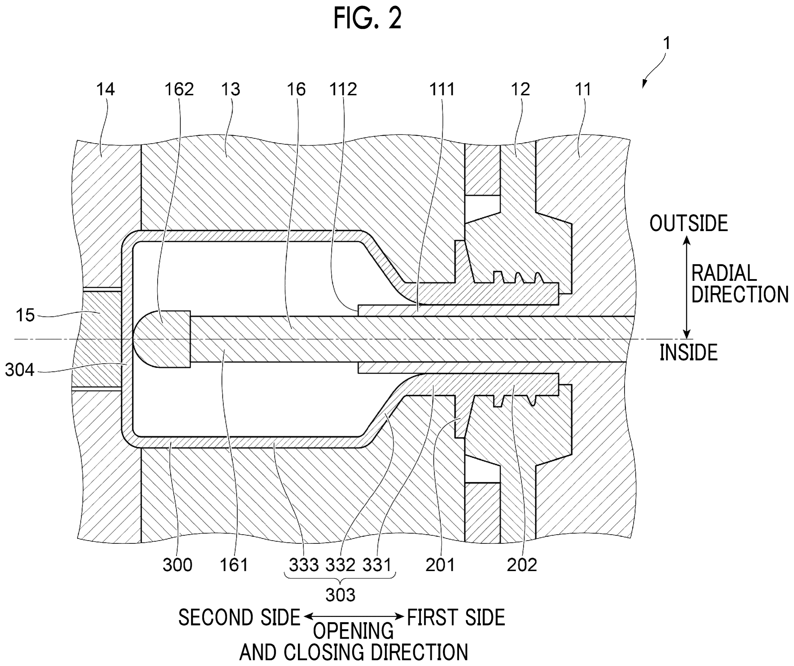

FIGS. 1 and 2 are sectional views showing an example of a configuration of a blow molding mechanism 1 according to the present embodiment.

FIGS. 1 and 2 are sectional views when the blow molding mechanism 1 is viewed from an upper side toward a lower side in an up-down direction. For this reason, a front side of the drawing of FIG. 1 is the upper side in the up-down direction, and a rear side of the drawing is the lower side in the up-down direction. In addition, FIG. 1 shows the blow molding mechanism 1 immediately before blow molding is performed, and FIG. 2 shows the blow molding mechanism 1 immediately after the blow molding is performed.

The blow molding mechanism 1 shown in FIGS. 1 and 2 is a mechanism applied to a mold unit that molds a final molded product 300 from an intermediate molded product 200 through injection blow molding that combines injection molding and blow molding. For example, the final molded product 300 is a bottle container such as a PET bottle. The mold unit to which the blow molding mechanism 1 is applied includes a stationary mold, a movable mold, and an intermediate mold disposed between the stationary mold and the movable mold. Each of the stationary mold, the movable mold, and the intermediate mold is combined with a mold for performing molding and various types of devices that operate in conjunction with the mold.

In the injection blow molding, the injection molding is performed in a state where the stationary mold and the intermediate mold are closed, thereby molding the bottomed cylindrical intermediate molded product 200 including an opening portion 205. In addition, in the injection blow molding, the final molded product 300 is molded by performing blow molding on the intermediate molded product 200 in a state where the movable mold and the intermediate mold are closed. In the injection blow molding, the intermediate mold alternately performs injection molding and blow molding while moving between a position facing the stationary mold and a position facing the movable mold.

The blow molding mechanism 1 includes an extending mechanism 11 that causes a columnar extension rod 16 which extends the intermediate molded product 200 to protrude inside the intermediate molded product 200 during blow molding and that further outputs air. In addition, the blow molding mechanism 1 includes a first split mold 12, a second split mold 13, a first bottom mold 14, and a second bottom mold 15 that function as a mold during blow molding. The extending mechanism 11 and the first split mold 12 in the blow molding mechanism 1 constitute a part of the intermediate mold, and the second split mold 13, the first bottom mold 14, and the second bottom mold 15 constitute a part of the movable mold.

Hereinafter, in the mold unit to which the blow molding mechanism 1 is applied, a direction in which the stationary mold and the intermediate mold are opened and closed as a whole, and a direction in which the movable mold and the intermediate mold are opened and closed as a whole (an operation direction of the extension rod 16) will be called an "opening and closing direction". Further, a base side of the extension rod 16 in the opening and closing direction will be called a "first side", and a tip end side of the extension rod 16 in the opening and closing direction will be called a "second side". In addition, a direction (for example, a direction perpendicular to the operation direction of the extension rod 16) perpendicular to the axial direction (opening and closing direction) of the intermediate molded product 200 during blow molding will be called a "radial direction". Further, a center axis (one-dot chain line) side of the intermediate molded product 200 in the radial direction will be called an "inside", and an opposite side thereto will be called an "outside".

The extending mechanism 11 includes, at a tip portion, a tubular long shaft pipe 111 including a protrusion port 112 for causing the extension rod 16 to protrude. The long shaft pipe 111 brings the tip portion of the extension rod 16 into contact with the inner wall 206 of the intermediate molded product 200 by causing the extension rod 16 to protrude from the protrusion port 112 to the second side in the opening and closing direction in a state where the protrusion port 112 is inserted into the intermediate molded product 200 from the opening portion 205 of the intermediate molded product 200. Specifically, the extending mechanism 11 brings a contact portion 162 of the tip end portion of the extension rod 16 into contact with the inner wall 206 of the intermediate molded product 200. Then, the extending mechanism 11 extends the intermediate molded product 200 by further extending the extension rod 16 to the second side in the opening and closing direction.

In addition, the extending mechanism 11 expands the intermediate molded product 200 by outputting high-pressure air to the second side in the opening and closing direction from the protrusion port 112. The high-pressure air output at this time is output from a gap between the extension rod 16 in a state of protruding from the protrusion port 112 and an inner wall of the long shaft pipe 111. FIG. 1 shows the intermediate molded product 200 before the extension rod 16 protruding from the protrusion port 112 is extended. In addition, FIG. 2 shows the final molded product 300 molded by extending and expanding the intermediate molded product 200 of FIG. 1 through blow molding.

Herein, each part of the intermediate molded product 200 and the final molded product 300 will be described. As shown in FIG. 1, the intermediate molded product 200 includes a fringe portion 201 which is a portion protruding most outward in the radial direction and a mouth portion 202 which is a portion on the first side of the fringe portion 201 in the opening and closing direction. In addition, the intermediate molded product 200 includes a main body 203 and a bottom portion 204 which are portions on the second side of the fringe portion 201 in the opening and closing direction.

In addition, as shown in FIG. 2, the final molded product 300 includes the fringe portion 201, the mouth portion 202, and a main body 303 and a bottom portion 304 which are portions on the second side of the fringe portion 201 in the opening and closing direction. The main body 303 is a portion where the main body 203 of the intermediate molded product 200 is blow-molded. The main body 303 includes a neck portion 331, a shoulder portion 332, and a body portion 333. The bottom portion 304 is a portion where the bottom portion 204 of the intermediate molded product 200 is blow-molded.

The first split mold 12 is a separable split mold called a split or a mouth split mold and grips the mouth portion 202 of the intermediate molded product 200 and the final molded product 300 in a closed state. FIGS. 1 and 2 show the first split mold 12 in a closed state. When the final molded product 300 is molded by blow molding, the first split mold 12 is opened from the inside to the outside in the radial direction with respect to the final molded product 300. Accordingly, the mouth portion 202 of the final molded product 300 is released from the first split mold 12.

The second split mold 13 is a separable split mold also called a blow split mold, functions as one of the molds for blow molding, and molds the main body 303 of the final molded product 300 from the main body 203 of the intermediate molded product 200 in a closed state during blow molding. FIG. 1 shows the second split mold 13 in a closed state. When the final molded product 300 is completed by blow molding, the second split mold 13 is opened from the inside to the outside in the radial direction with respect to the final molded product 300. Accordingly, the main body 303 of the final molded product 300 and the fringe portion 201 are released from the second split mold 13.

The first bottom mold 14 and the second bottom mold 15 function as one of the molds for blow molding and mold the bottom portion 304 of the final molded product 300 from the bottom portion 204 of the intermediate molded product 200 during blow molding. Among these, the second bottom mold 15 functions as a part of an ejector mechanism that separates the final molded product 300 from itself and the first bottom mold 14 by protruding from the second side to the first side in the opening and closing direction after the blow molding.

### <Specific Shape of Extension Rod 16>

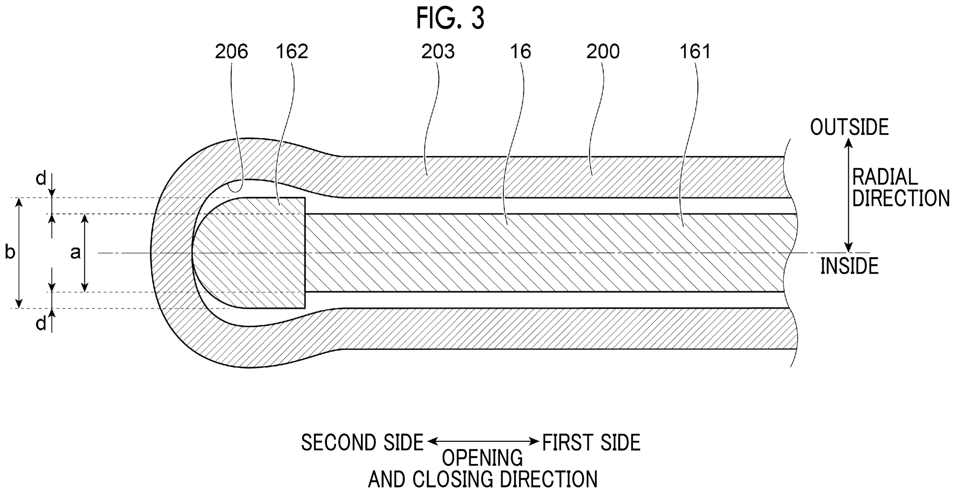

FIG. 3 is a sectional view showing a state where the extension rod 16 of FIG. 1 extends the intermediate molded product 200.

The blow molding mechanism 1 according to the present embodiment is characterized in the tip portion of the extension rod 16 that extends the intermediate molded product 200 during blow molding. As shown in FIG. 3, the extension rod 16 includes a columnar main body 161 that extends inside the intermediate molded product 200 and the tip portion that is formed at the tip portion of the main body 161 and includes the contact portion 162 which is brought into contact with the inner wall 206 of the intermediate molded product 200. The contact portion 162 has a shape in which a hemispherical portion and a cylindrical portion are integrated with each other, and the hemispherical portion is disposed on the tip end side (the second side in the opening and closing direction).

The contact portion 162 may be molded integrally with the main body 161 or may be molded independently of the main body 161. In a case where the contact portion 162 is molded independently of the main body 161, the contact portion 162 may be joined to the main body 161 or may be attachable and detachable. In a case where the contact portion 162 is joined to the main body 161, for example, the contact portion 162 may be joined by a welding or bonding technique. In addition, in a case where the contact portion 162 can be attachable to and detachable from the main body 161, for example, a screw mechanism may be provided in the main body 161 and the contact portion 162 such that the contact portion 162 is attachable and detachable.

Herein, the extension rod 16 constituting the blow molding mechanism 1 according to the present embodiment is characterized in that a diameter b of the contact portion 162 is larger than a diameter a of the main body 161. Specifically, since the diameter b is larger than the diameter a by a length d on one side, the length of the diameter b is longer than the length of the diameter a by the length d × 2. Since the diameter b may be longer than the diameter a, the length d is not particularly limited, and the length of the contact portion 162 in the axial direction (opening and closing direction) is not particularly limited. However, a value of the preferable length d can be acquired from a difference between an inner diameter of the intermediate molded product 200 after extension, which is calculated from an extension ratio during extension of the intermediate molded product 200 determined in advance, and the diameter of the main body 161 of the extension rod 16 determined in advance.

For example, it is assumed that a difference between an outer diameter and the inner diameter of the intermediate molded product 200 in the axial direction (opening and closing direction) is constant and an extension ratio when the intermediate molded product 200 is extended is approximately twice. In addition, it is assumed that the extension rod 16 is in a state before the contact portion 162 is formed in the tip portion (that is, a state where only the main body 161 is present). In this case, the inner diameter of the intermediate molded product 200 after the extension is reduced to approximately 0.4 times the inner diameter before the extension. Therefore, for example, when the inner diameter of the intermediate molded product 200 before the extension is 17.6 mm, the inner diameter of the intermediate molded product 200 after the extension is approximately 7.4 mm. On the other hand, for example, it is assumed that the diameter of the extension rod 16 is 8 mm. In this case, since the diameter of the extension rod 16 is larger than the inner diameter of the intermediate molded product 200 after the extension by approximately 0.6 mm, the intermediate molded product 200 comes into contact with the extension rod 16 in the middle of the extension.

For this reason, when the contact portion 162 is formed on the tip portion of the extension rod 16, the contact portion 162 having a length exceeding the value of the length d on one side is prepared. In the above case, it is necessary to prepare the contact portion 162 in which the value of the length d exceeds at least approximately 0.3 mm obtained by dividing approximately 0.6 mm, which is a difference between the inner diameter of the intermediate molded product 200 after the extension and the diameter of the extension rod 16, by 2.

### <Comparison with Extension Rod of Related Art>

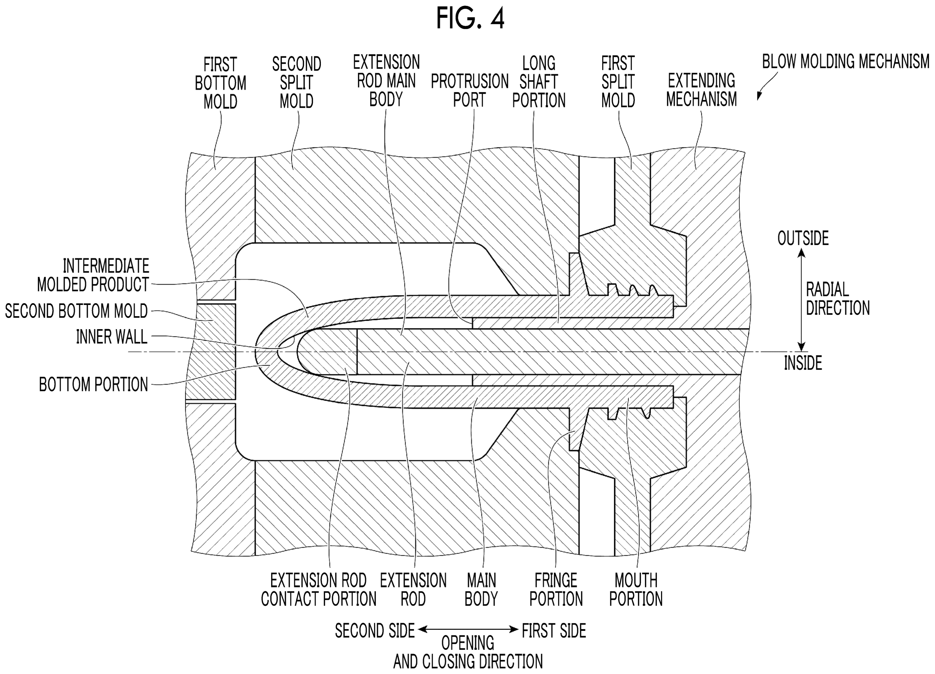

As described above, the blow molding mechanism 1 according to the present embodiment is characterized in the tip portion of the extension rod 16 that extends the intermediate molded product 200 during blow molding. Hereinafter, characteristics of the tip portion of the extension rod 16 and effects thereof will be described with reference to FIGS. 4 to 6, which are examples of a configuration of the blow molding mechanism of the related art.

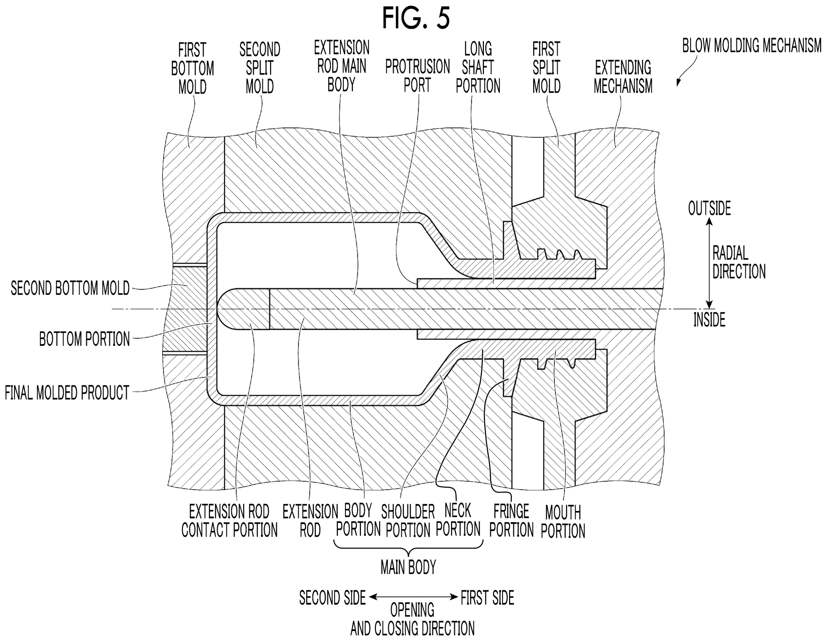

FIGS. 4 and 5 are sectional views showing an example of the configuration of the blow molding mechanism of the related art.

FIGS. 4 and 5 are sectional views when the blow molding mechanism of the related art is viewed from the upper side toward the lower side in the up-down direction. For this reason, a front side of the drawing of FIG. 4 is the upper side in the up-down direction, and a rear side of the drawing is the lower side in the up-down direction. In addition, FIG. 4 shows the blow molding mechanism of the related art immediately before blow molding is performed, and FIG. 5 shows the blow molding mechanism of the related art immediately after blow molding is performed.

The configuration of the blow molding mechanism of the related art shown in FIGS. 4 and 5 is basically the same as the configuration of the blow molding mechanism 1 according to the present embodiment shown in FIGS. 1 and 2 described above. That is, as shown in FIG. 4, in the blow molding mechanism of the related art, the intermediate molded product is extended by extending the extension rod protruding from the protrusion port of the extending mechanism to the second side in the opening and closing direction. FIG. 4 shows the intermediate molded product before the extension rod protruding from the protrusion port is extended. In addition, FIG. 5 shows the final molded product molded by extending the intermediate molded product of FIG. 4 and further expanding the intermediate molded product with high-pressure air.

However, when the configuration of the blow molding mechanism of the related art shown in FIGS. 4 and 5 and the configuration of the blow molding mechanism 1 according to the present embodiment shown in FIGS. 1 and 2 described above are compared, the configuration of the extension rod of the blow molding mechanism of the related art and the configuration of the extension rod 16 of the blow molding mechanism 1 according to the present embodiment are different from each other. Specifically, the shape of an extension rod contact portion of the tip portion of the extension rod of the extending mechanism of the blow molding mechanism of the related art and the shape of the contact portion 162 of the tip portion of the extension rod 16 of the extending mechanism 11 of the blow molding mechanism 1 according to the present embodiment are different from each other.

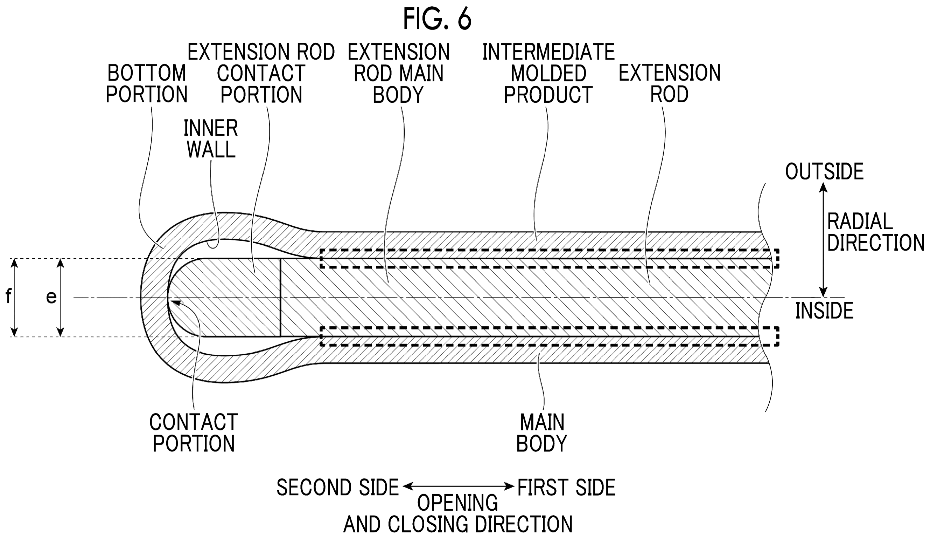

As illustrated in FIGS. 1 and 2, in the extension rod 16 of the extending mechanism 11 of the blow molding mechanism 1 according to the present embodiment, the contact portion 162 having a diameter larger than that of the main body 161 is molded in the tip portion. On the other hand, as shown in FIGS. 4 and 5, in the extension rod of the extending mechanism of the blow molding mechanism of the related art, the diameter of an extension rod contact portion of a tip portion and the diameter of an extension rod main body are the same. In this case, the intermediate molded product is likely to come into contact with the extension rod in the middle of extending the intermediate molded product. Hereinafter, the reason will be described with reference to FIG. 6.

### <Specific Shape of Extension Rod of Related Art>

FIG. 6 is a sectional view showing a state where the extension rod of the related art of FIG. 4 extends the intermediate molded product.

As shown in FIG. 6, the extension rod of the blow molding mechanism of the related art includes a columnar extension rod main body that extends inside the intermediate molded product and the extension rod contact portion that is molded at the tip portion of the main body and is brought into contact with the inner wall of the intermediate molded product. The extension rod contact portion has a shape in which a hemispherical portion and a cylindrical portion are integrated with each other, and the hemispherical portion is disposed on the second side in the opening and closing direction.

In the extension rod of the related art, as shown in FIG. 6, a diameter f of the extension rod contact portion is the same as a diameter e of the extension rod main body. For this reason, when the extension rod is extended to the second side in the opening and closing direction in a state where the extension rod contact portion is brought into contact with an inner wall of a bottom portion of the intermediate molded product, the intermediate molded product is extended to the second side in the opening and closing direction, and stress that deforms the shape of the main body of the intermediate molded product is generated. Specifically, when the intermediate molded product extends to the second side in the opening and closing direction, the main body of the intermediate molded product is pulled to an end point of a portion (contact portion) where the extension rod contact portion and intermediate molded product are in contact with each other and approaches the extension rod. Then, the diameter of the main body of the intermediate molded product gradually decreases and approaches the diameter of the extension rod. As a result, the main body of the intermediate molded product comes into contact with the extension rod main body in a portion surrounded by a broken line in FIG. 6.

On the other hand, in the extension rod 16 according to the present embodiment, a diameter of the contact portion 162 of the tip portion is larger than the diameter of the main body 161, unlike the extension rod of the related art. For this reason, even when stress is generated during the extension of the intermediate molded product 200 and the main body 203 approaches the main body 161 of the extension rod 16, as shown in FIG. 3, contact of the main body 203 of the intermediate molded product 200 with the main body 161 of the extension rod 16 can be suppressed by the length d.

### <Modification Example>

The contact portion 162 of the tip portion of the extension rod 16 has a shape in which the hemispherical portion and the cylindrical portion are integrated with each other as shown in FIGS. 1 to 3 in the embodiment described above, but the present invention is not limited thereto. Since the diameter of the contact portion 162 may be larger than the diameter of the main body 161, for example, the contact portion 162 may be molded in a spherical shape in the tip portion of the extension rod 16.

In summary, the blow molding mechanism to which the present invention is applied need only adopt the following configuration, and various types of embodiments can be adopted.

That is, the blow molding mechanism 1 according to the present embodiment is the blow molding mechanism including the extension rod 16 that is inserted into the intermediate molded product 200 via the opening portion 205 and extends the intermediate molded product 200 when blow molding is performed on the intermediate molded product 200 including the opening portion 205 and molded into a bottomed cylindrical shape, the extension rod 16 includes a columnar main body 161 that extends inside the intermediate molded product 200 and the tip portion that is formed at the tip portion of the main body 161 and includes the contact portion 162 which comes into contact with the inner wall 206 of the intermediate molded product 200, and the diameter b of the contact portion 162 of the extension rod 16 is larger than the diameter a of the main body 161 of the extension rod 16.

Accordingly, since the diameter of the contact portion 162 of the tip portion of the extension rod 16 is larger than the diameter of the main body 161, even when stress is generated during the extension of the intermediate molded product 200, and the main body 203 of the intermediate molded product 200 approaches the main body 161 of the extension rod 16, contact is suppressed. As a result, a decrease in appearance quality of the final molded product 300 that can be caused by a temperature decrease due to the contact of the intermediate molded product 200 with the extension rod 16 can be suppressed.

Herein, the contact portion 162 of the extension rod 16 may be attachable to and detachable from the main body 161 of the extension rod 16.

Accordingly, the contact portion 162 can be replaced in accordance with the shape of the intermediate molded product 200. Therefore, replacement work can be made more efficient than in a case where the entire extension rod 16 is replaced.

In addition, the main body 161 of the extension rod 16 does not come into contact with the inner wall 206 of the intermediate molded product 200 after the extension.

Accordingly, a decrease in appearance quality of the final molded product 300 that can be caused by a temperature decrease due to the contact of the intermediate molded product 200 with the extension rod 16 can be suppressed.

In addition, a difference between the diameter b of the contact portion 162 of the extension rod 16 and the diameter a of the main body 161 of the extension rod 16 may be larger than a value obtained by dividing a difference between the inner diameter of the intermediate molded product 200 after the extension and the diameter a of the main body 161 of the extension rod 16 by 2.

Accordingly, design of the contact portion 162 of the extension rod 16 can be made more efficient.

In addition, the mold unit to which the present invention is applied need only adopt the following configuration, and various types of embodiments can be adopted.

That is, the mold unit according to the present embodiment is a mold unit including the blow molding mechanism 1, and the blow molding mechanism 1 includes the extension rod 16 that is inserted into the intermediate molded product 200 via the opening portion 205 and extends the intermediate molded product 200 when blow molding is performed on the intermediate molded product 200 including the opening portion 205 and molded into a bottomed cylindrical shape, the extension rod 16 includes a columnar main body 161 that extends inside the intermediate molded product 200 and the tip portion that is molded at the tip portion of the main body 161 and includes the contact portion 162 which comes into contact with the inner wall 206 of the intermediate molded product 200, and the diameter b of the contact portion 162 of the extension rod 16 is larger than the diameter a of the main body 161 of the extension rod 16.

<Others>

Although the embodiment of the present invention has been described hereinbefore, the present invention is not limited to the embodiment described above. In addition, effects of the present invention are also not limited to those described in the embodiment described above. For example, the extending mechanism 11, the first split mold 12, the second split mold 13, the first bottom mold 14, and the second bottom mold 15 constituting the blow molding mechanism 1 shown in FIGS. 1 and 2 are merely examples for achieving the object of the present invention and are not particularly limited. In addition, also the configuration of the extension rod 16 shown in FIG. 3 is merely an example for achieving the object of the present invention and is not particularly limited.

In addition, in the embodiment described above, the final molded product is a bottle container. However, the final molded product does not need to be a bottle container. The final molded product may be molded by injection blow molding.

Further, the final molded product does not need to be a molded product molded by injection blow molding. Since the molding of the intermediate molded product and the molding of the final molded product are performed by different molds, for example, the molded product molded by so-called two-color molding in which different resins or materials are combined and integrated with each other may be the final molded product. In addition, for example, the molded product may be the final molded product molded by so-called insert molding in which an insert product such as a metal screw and a terminal is put into a mold in advance, and a molten resin is injected around the insert product to integrally mold the insert product.

In addition, the injection blow molding described above may be a hot parison method in which blow molding is performed in a state where preheating during injection molding is maintained in the intermediate molded product. In addition, the method may be a cold parison method in which the intermediate molded product is once cooled and then reheated to perform blow molding.

### Brief Description of the Reference Symbols

- 1:: blow molding mechanism
- 11:: extending mechanism
- 12:: first split mold
- 13:: second split mold
- 14:: first bottom mold
- 15:: second bottom mold
- 16:: extension rod
- 200:: intermediate molded product
- 206:: inner wall
- 112:: protrusion port
- 111:: long shaft pipe
- 161:: main body
- 162:: contact portion
- 205:: opening portion
- 300:: final molded product
- 201:: fringe portion
- 202:: mouth portion
- 203, 303:: main body
- 204, 304:: bottom portion
- 331:: neck portion
- 332:: shoulder portion
- 333:: body portion

## Claims

1. A blow molding mechanism (1) comprising:
an extension rod (16) that is inserted into a bottomed cylindrical intermediate molded product (200) including an opening portion (205) via the opening portion (205) and extends the intermediate molded product (200) when blow molding is performed on the intermediate molded product (200),
wherein the extension rod (16) includes a columnar main body (161) that extends inside the intermediate molded product (200) and a tip portion that is formed at a tip portion of the main body (161) and includes a contact portion (162) which is brought into contact with an inner wall (206) of the intermediate molded product (200), and
a diameter (b) of the contact portion (162) is larger than a diameter (a) of the main body (161).

2. The blow molding mechanism (1) according to claim 1,
wherein the contact portion (162) is attachable to and detachable from the main body (161).

3. The blow molding mechanism (1) according to claim 1,
wherein the main body (161) does not come into contact with the inner wall (206) of the intermediate molded product (200) after extension.

4. The blow molding mechanism (1) according to claim 3,
wherein a difference between the diameter (b) of the contact portion (162) and the diameter (a) of the main body (161) is larger than a value obtained by dividing a difference between an inner diameter of the intermediate molded product (200) after the extension and the diameter (a) of the main body (161) by 2.

5. A mold unit comprising:
a blow molding mechanism (1),
wherein the blow molding mechanism (1) includes
an extension rod (16) that is inserted into a bottomed cylindrical intermediate molded product (200) including an opening portion (205) via the opening portion (205) and extends the intermediate molded product (200) when blow molding is performed on the intermediate molded product (200),
the extension rod (16) includes a columnar main body (161) that extends inside the intermediate molded product (200) and a tip portion that is formed at a tip portion of the main body (161) and includes a contact portion (162) which is brought into contact with an inner wall (206) of the intermediate molded product (200), and
a diameter (b) of the contact portion (162) is larger than a diameter (a) of the main body (161).
